# EUROPÄISCHE PATENTANMELDUNG

(11) **EP 1 491 119 A1**
(43) Veröffentlichungstag der Anmeldung: **29.12.2004**
(21) Anmeldenummer: 04014990.8
(22) Anmeldetag: 25.06.2004
(51) Int. Cl.: A47J 27/00

(54) **Elektrische Heizvorrichtung**

(30) Priorität: 25.06.2003 ES 200301534
(71) Anmelder: BSH Bosch und Siemens Hausgeräte GmbH, 81739 München (DE)
(72) Erfinder: Lete, Juan Manuel, 31820 Etxarri-Aranaz (ES)

(57) **Zusammenfassung**

Die elektrische Heizvorrichtung bildet eine Friteuse, einen Lebensmittelkochtopf oder dergleichen und umfasst einen Topf (1), dessen Boden (2) eben ist und an dessen Außenseite ein elektrischer Heizwiderstand (3) angeordnet ist, der in Kontakt mit dem Boden (2) steht und an diesem mittels eines Halteelements (4) befestigt ist, das an dem Boden durch Mittel (5) wie Schrauben, Nieten oder dergleichen befestigt ist. An der Halteeinrichtung (4) befestigt ist ein Reflektorelement (6) als Halterung des Widerstands (3) vorgesehen, das diesen an den Boden (2) drückt, um den Kontakt damit sicherzustellen und Wärmeverlust zu vermeiden.

## Beschreibung

### GEBIET DER ERFINDUNG

Die vorliegende Erfindung betrifft eine elektrische Heizvorrichtung in Gestalt einer Friteuse oder anderen Behälterart, wie beispielsweise einem Topf, zum Kochen von Lebensmitteln, die besondere Anwendung sowohl in Haushalt als auch im industriellen Bereich findet, d.h. sowohl in Privatwohnungen als auch in Gaststätten, Restaurants usw. Konkret handelt es sich um eine Einrichtung zum Befestigen des Heizwiderstands an der Unterfläche.

### STAND DER TECHNIK

Es sind zahlreiche Arten elektrischer Heizvorrichtungen bekannt, die Lebensmittelkochtöpfe, Friteusen usw. bilden, wobei diese Art von Vorrichtungen über einen Topf verfügt, in dem das Frittieren oder Kochen der Lebensmittel erfolgt und dessen Erhitzung mithilfe einer elektrischen Heizeinrichtung durchgeführt wird, die auf der Außenseite des Bodens des entsprechenden Topfs angeordnet und durch verschiedenartige, herkömmliche Einrichtungen gehalten ist.

In diesem Sinne betrifft die Patentschrift EP 0 097 265 B1 eine Vorrichtung der angegebenen Art, deren Boden allerdings nicht durchgehend eben und flach bzw. nicht einstückig mit dem Topfmantel ausgebildet ist, wobei die Heizeinrichtung, die in allen, diesem Patent entsprechenden Ausführungsformen vorgesehen ist, an- bzw. eingefügt ist und generell an einer Behälteraußenwand angelötet ist.

In der Patentschrift EP 0 238 955 B1 ist eine ähnliche Vorrichtung beschrieben, deren Boden Öffnungen zum Anschluss für einen Durchlauferhitzer zeigt.

Ein weiteres Dokument, das angeführt werden kann, ist die Patentschrift DE 100 19 943 C2, in der ein induktionsbeheizter Behälter mit einer Heizeinrichtung beschrieben ist, die seitlich in das Topfinnere ragt, wofür der Topf einen seitlichen Durchbruch in seiner Mantelseite aufweist.

In der Patentschrift DE 36 00 294 A1 ist gleichfalls eine im Topfinneren angeordnete Heizeinrichtung, beispielsweise in Gestalt einer Grillspirale, beschrieben.

Ein weiteres Dokument, das die Beschreibung einer ähnlichen Vorrichtung enthält, ist schließlich die Patentschrift DE 35 26 186 A1, bei der die Heizung an der Topfaußenseite angebracht ist, wobei der Topf allerdings keinen flachen Boden aufweist, sondern einen Durchbruch zur Verbindung mit einem angefügten Durchlauferhitzer.

### BESCHREIBUNG DER ERFINDUNG

Es ist die Aufgabe der Erfindung, eine elektrische Heizeinrichtung der angegebenen Art bereitzustellen, bei der die Heizeinrichtung durch einen elektrischen Heizwiderstand gebildet ist, der an der Außenseite des Bodens des Topfs, der zu der Vorrichtung gehört, und in Kontakt mit der Außenfläche fixiert ist, wobei sie außerdem die Besonderheit aufweist, dass der Topfboden durchgehend eben und flach ist.

Die erfindungsgemäße Heizvorrichtung weist eine Reihe neuartiger Besonderheiten auf, aus denen sich Vorteile in Bezug auf die Vorrichtungen ergeben, die zu den im vorherigen Abschnitt angegebenen Dokumenten gehören.

In diesem Sinne weist die Heizvorrichtung der Erfindung, die sich in Gestalt einer Friteuse, eines Kochtopf oder dergleichen darstellen kann, einen durchgehend ebenen und flachen Topfboden und eine Heizeinrichtung auf, die an der Außenfläche desselben angeordnet und durch einen Heizwiderstand in Kontakt mit der Außenfläche des Bodens ausgebildet ist.

Ein weiteres neuartiges Kennzeichen ist, dass der Topfboden vorzugsweise einstückig mit dem Topfmantel ausgeführt ist und beispielsweise mittels eines Tiefziehvorgangs aus einem Blechstück gefertigt sein kann.

Ein weiteres neuartiges Kennzeichen ist, dass die Halterung des elektrischen Heizwiderstands mithilfe einer Einrichtung erfolgt, die an der Außenseite des Topfbodens mithilfe jeglichen Systems befestigt ist, etwa mithilfe von Schrauben, Nieten usw., mit der Besonderheit, dass in dieser Halteeinrichtung ein Reflektor integriert sein kann, der dafür sorgt, dass weitgehend die gesamte Heizenergie, die vom Heizwiderstand erzeugt wird, zur Erwärmung des Topfbodens eingesetzt wird und nicht teilweise durch Abstrahlung nach unten verloren geht. Der Reflektor, der vorzugsweise durch ein Blech ausgebildet ist, bildet eine Halterung, die beispielsweise mittels einer Schweißverbindung an der Halteeinrichtung befestigt ist.

Es ist die Tatsache hervorzuheben, dass die Halteeinrichtung des Heizwiderstands unter leichter Vorspannung am Topfboden befestigt sein kann, wodurch sich der Heizwiderstand an den Topfboden drücken lässt, wodurch sichergestellt sein kann, dass ein zuverlässiger und für eine gute Wärmeübertragung günstiger Kontakt zwischen dem Heizwiderstand und dem Topfboden hergestellt ist.

Andererseits kann in einer Ausführungsvariante der Heizwiderstand durch eine ebene Heizspirale ausgebildet sein, sodass sich zusammen mit der Halteeinrichtung eine universelle Gestaltung ergibt, die für verschiedene Topfoder Behältergrößen und -formen passt, weswegen deren Größe und Form in einem weiten Bereich variieren können, ohne dass der elektrische Heizwiderstand in seiner Form und Größe verändert werden muss, wobei letzterer alternativ auch mäanderförmig angeordnet sein kann.

In einer bevorzugten Ausführungsform ist die Halteeinrichtung schüsselförmig aus Blech ausgebildet, deren Rand geeignete Befestigungselemente wie etwa Befestigungsaugen, einen durchgehenden Rand der Schüssel usw. vorsieht, wodurch eine unlösbare oder lösbare Befestigung ermöglicht ist.

Außerdem ist auch eine Befestigung mittels Schnappverbindungen oder einer Kombination dieser mit Schrauben oder Nieten möglich, wodurch sich der Heizwiderstand unabhängig von der Gestalt des Topfes oder Behälters fertigen und anschließend an verschiedene Topfformen montieren lässt.

Es ist die Tatsache hervorzuheben, dass sich durch die lösbare Anbringung der Halteeinrichtung ein defekter oder fehlerhaft funktionierender elektrischer Heizwiderstand leicht warten oder austauschen lässt, ohne dass hierzu der Behälter ausgetauscht oder beschädigt werden muss.

### BESCHREIBUNG DER ZEICHNUNGEN

Zur Vervollständigung der folgenden Beschreibung, und um zu einem besseren Verständnis der Kennzeichen der Erfindung zu verhelfen, liegt der vorliegenden Beschreibung ein Satz Zeichnungen bei, auf deren Grundlage die Neuerungen und Vorteile der erfindungsgemäßen elektrischen Heizvorrichtung leichter verständlich sind.

Es zeigen:
Figur 1 eine Ansicht entsprechend einem Schnitt durch eine vertikale Ebene der Heizvorrichtung der Erfindung in Gestalt einer Friteuse, eines Topfes oder dergleichen.
Figur 2 ein vergrößertes Detail der Befestigungsweise des Heizwiderstands der in der vorhergehenden Figur dargestellten Vorrichtung am Topfboden.
Figur 3 eine Perspektivansicht der Heizvorrichtung von Figur 1 in umgekehrter Stellung.
Figur 4 eine Ausführungsalternative des Heizwiderstands, die durch eine flache Spirale ausgebildet ist, welche in der Schüssel untergebracht ist, die das Halteoder Befestigungsmittel am Topf der Vorrichtung bildet.

### BESCHREIBUNG DER BEVORZUGTEN AUSFÜHRUNGSFORM

Hinsichtlich der Zeichnungen ist zu sehen, wie die erfindungsgemäße elektrische Heizvorrichtung die Form eines Behälters aufweist, der sich als Friteuse, Topf oder dergleichen darstellen kann, umfassend einen Topf 1, dessen Boden 2 eben und flach ist, während er außen einen Körper ausbildet, der mit dem Topfmantel einstückig ist und der mittels eines Tiefziehvorgangs aus einem Blechstück gefertigt sein kann.

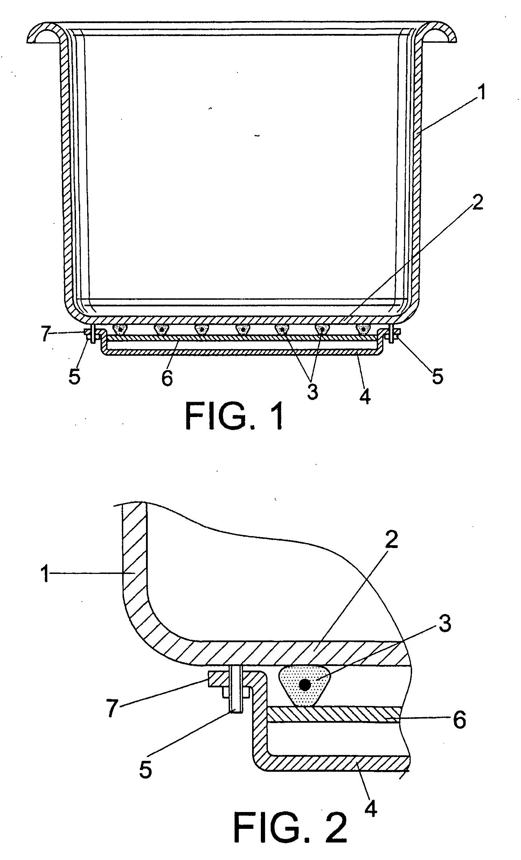

An der Außenseite des Bodens 2 ist ein elektrischer Heizwiderstand 3 angeordnet, der mit dem Boden in Kontakt ist und mittels einer Einrichtung 4 befestigt ist, die beispielsweise in Gestalt einer Art Schüssel ausgeführt sein kann, welche mittels Schrauben, Nieten oder einem anderen geeigneten Befestigungselement 5 am Boden 2 befestigt ist, wie in Figur 2 im Detail gezeigt, und deren Befestigung außerdem durch jegliches andere geeignete Mittel ausgeführt sein kann und vorzugsweise lösbar ist, um bei Bedarf den elektrischen Widerstand 3 austauschen zu können.

An der Halteeinrichtung 4 in Schüsselform oder jeglicher anderen, annehmbaren Form ist ein Reflektorelement 6 vorgesehen, auf das sich der elektrische Widerstand stützt, wobei dieses Reflektorelement 6 ein Halte- und Befestigungselement für den Heizwiderstand 3 ausbildet, wobei dieses Reflektorelement 6 an der Halteeinrichtung oder Schüssel 4 mittels einer Schweißverbindung oder mittels jeglichem anderen, geeigneten System befestigt ist.

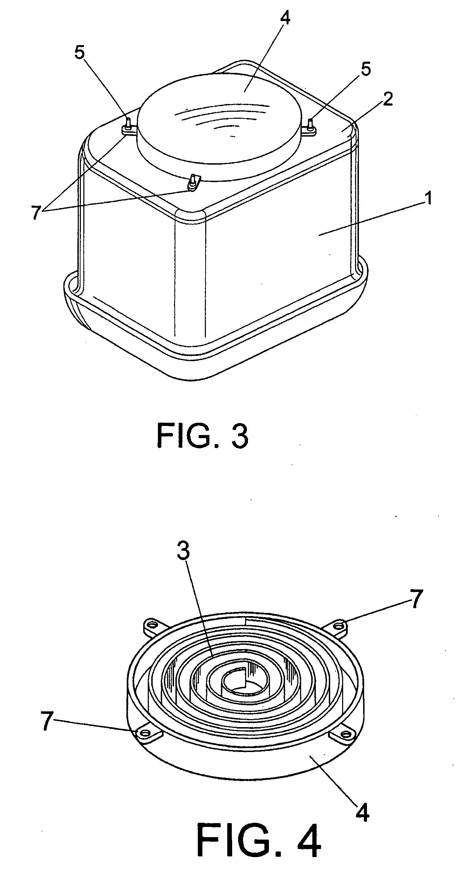

Die Schüssel, die die Halteeinrichtung 4 des elektrischen Heizwiderstands 3 bildet, wie in Figur 4 dargestellt, kann mit Elementen wie etwa Befestigungsaugen 7 oder dergleichen zum Ausführen de oben angegebenen Befestigung versehen sein, während der Widerstand 3 durch ein ebenes, spiralförmiges Element ausgebildet sein kann, wie in Figur 4 gezeigt, wobei dieser Widerstand 3 sogar mäanderförmig angeordnet sein kann.

Schließlich ist darauf hinzuweisen, dass die Halteeinrichtung 4 des elektrischen Heizwiderstands 3 am Boden 2 des Topfs 1 mit einer leichten Vorspannung befestigt ist, wodurch ein Drücken des Heizwiderstands 3 an den Boden 2 erzielt ist, wodurch ein Kontakt mit diesem und somit die Wärmeübertragung an den Boden sichergestellt ist.

Zwischen der Halteeinrichtung 4 und dem Boden 2 des Topfs 1 ist keine Dichtung notwendig, da die Topfaußenseite normalerweise keinem Einfluss der Medien ausgesetzt ist, die mithilfe der beschrieben Vorrichtung erhitzbar sind, wobei außerdem vorgesehen ist, dass die Größe der Vorrichtung in weiten Grenzen variieren kann. Für eine Vielzahl von verschiedenen Größen von Vorrichtungen oder Töpfen 1 reicht es aus, wenn einige wenige Varianten von elektrischen Heizwiderständen zur Verfügung stehen.

### Bezugszeichenliste

- 10: Topf
- 12: Topfboden
- 14: Heizwiderstand
- 16: Halteeinrichtung
- 18: Topfmantel
- 20: Reflektor
- 22: Heizspirale
- 24: Befestigungselement
- 26: Rand

## Patentansprüche

1. Medienerhitzer mit elektrischer Heizeinrichtung, insbesondere Kochgerät, bestehend aus einem Topf (10) und einem an dessen Topfboden (12) angeordneten Heizwiderstand (14), **dadurch gekennzeichnet, dass** der Heizwiderstand am Topfboden mittels einer außen am Topfboden (12) befestigten Halteeinrichtung (16) fixiert ist.

2. Medienerhitzer nach Anspruch 1, **dadurch gekennzeichnet, dass** der Topfboden (12) im Wesentlichen flach und einstückig mit einem Topfmantel (18) ausgebildet ist.

3. Medienerhitzer nach Anspruch 1 oder 2, **dadurch gekennzeichnet, dass** die Halteeinrichtung (16) eine Reflektoreinrichtung (20) aufweist, auf der der Heizwiderstand (14) angeordnet ist.

4. Medienerhitzer nach einem der Ansprüche 1 bis 3, **dadurch gekennzeichnet, dass** die Halte- bzw. Reflektoreinrichtung (16) unter leichter Vorspannung am Topfboden (12) befestigt ist, wodurch der Heizwiderstand (14) gegen den Topfboden (12) gedrückt ist.

5. Medienerhitzer nach einem der Ansprüche 1 bis 4, **dadurch gekennzeichnet, dass** der Heizwiderstand (14) als flach aufgewickelte Heizspirale (22) ausgebildet ist.

6. Medienerhitzer nach einem der Ansprüche 1 bis 4, **dadurch gekennzeichnet, dass** der Heizwiderstand (14) mäanderförmig angeordnet ist.

7. Medienerhitzer nach einem der voranstehenden Ansprüche, **dadurch gekennzeichnet, dass** die Halte- bzw. Reflektoreinrichtung (14 bzw. 20) aus Blech gefertigt ist.

8. Medienerhitzer nach einem der voranstehenden Ansprüche, **dadurch gekennzeichnet, dass** die Halteeinrichtung (14) eine schüsselförmige Gestaltung mit randseitigen Befestigungselementen (24) aufweist.

9. Medienerhitzer nach Anspruch 8, **dadurch gekennzeichnet, dass** die Halteeinrichtung (14) lösbar am Topfboden (12) befestigt ist.

10. Medienerhitzer nach Anspruch 8 oder 9, **dadurch gekennzeichnet, dass** die Halteeinrichtung (16) mittels Nieten, Schrauben und/oder einer Schnappverbindung am Topfboden (12) befestigt ist.
